(19) Europäisches Patentamt
European Patent Office
Office européen des brevets

(11) **EP 3 217 297 A1**

(12) **EUROPEAN PATENT APPLICATION**

(43) Date of publication:
**13.09.2017 Bulletin 2017/37**

(51) Int Cl.:
***G06F 17/30*** *(2006.01)*

(21) Application number: **16173130.2**

(22) Date of filing: **06.06.2016**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: **09.03.2016 EP 16159483**

(71) Applicant: **Deutsche Telekom AG
53113 Bonn (DE)**

(72) Inventor: **GRAFFUNDER, Andreas
13125 Berlin (DE)**

(74) Representative: **Vossius & Partner
Patentanwälte Rechtsanwälte mbB
Siebertstrasse 3
81675 München (DE)**

(54) **METHOD AND SYSTEM FOR GENERATING A TOPIC MODEL FOR STRUCTURING DATA FILES**

(57)    In particular, the method comprises the following steps, preferably in the following order: determining from a set of training data *TrD* an algebraic model for at least two parameters $\alpha$ and $\delta$ as nonlinear functions of a number of topics K, the average number of objects *L* in data files of a data set of data files *FD* or in the training data files *TrD,* a predetermined estimated range [$K_{min}$, $K_{max}$] of topics K and a predetermined granularity G of the topic model; optimizing the number of topics K and the at least two parameters $\alpha$ and $\delta$ using the algebraic model; and calculating the topic model on data files of a set of data files *FD* the optimized number K and the optimized at least two parameters $\alpha$ and $\delta$.

**EP 3 217 297 A1**

## Description

The present invention relates to a method and a system for generating a topic model for structuring data files. In particular, the present invention relates to a method and a system for generating a topic model for structuring textual data files like text documents.

More particularly, the invention relates to the object of structuring big collections of data, like textual documents in order to gain insight into their contents in subsequent processing steps, e.g. in Social Media (SOM) Monitoring. To this end, topics have to be detected and to each detected topic documents have to be assigned which are related to the respective topic.

In the field of structuring big collections of data, the following constraints are often required

R1: It should be possible to detect topics with very fine granularity, also called "fine granular topic models". The degree of granularity should be configurable by the user. R2: The processing should be automatic. Ideally, the system, e.g. the text-processing system, takes the pre-processed documents as input, the user specifies the degree of granularity and then the whole process of topic detection and documents categorization is done without any further involvement of the user.

R3: The topic model should contain as few wrong document categorizations as possible in order to avoid wrong conclusions in subsequent evaluations.

R4: Automatic topic modeling approaches are most often unsupervised learning processes and, therefore, subject to errors which result in inconsistent topics. The number of these inconsistent topics should be as low as possible.

R5: Often, big collections of documents have to be processed in a given limited amount of time. Therefore, the computational effort should be as low as possible.

According to constraint R2 the processing system should have a clustering functionality, i.e. the pre-processed documents/data files, e.g. text documents - preferably after preprocessing, e.g. removal of punctuation, numbers and stop-words, stemming, etc. - have to be assigned to topic clusters, whereby the topic detection as well as the document categorizations should be performed automatically.

From machine learning many approaches to clustering are known, especially the Latent Dirichlet Allocation, LDA, method has gained a high popularity. The LDA approach can also be seen as the state of the art of topic modeling.

However, the plain LDA requires the configuration of several parameters which have to be given by the user:

1) The number of topics, hereinafter denoted by "K", to be detected;

2) Parameters of the involved two Dirichlet distributions which act as prior distributions, called "hyperparameters" (see [1]). Most often symmetric prior distributions are used which means that two real hyperparameters have to be specified. In the following these hyperparameters are called $\alpha$ for the concentration parameter of the prior distribution of the topic proportions and $\delta$ for the concentration parameter of the prior distribution of the term distributions; and

3) Depending on the numeric algorithm and implementation of further parameters, e.g. the number of iterations.

The parameters according to 3) can often be specified once for the application at hand, i.e. they do not vary across different input data. Or, proven mechanisms for their automatic configuration exist. Therefore, during normal operation, there is no effort required by the user.

However, suitable values for the parameters under 1) and 2) vary according to the input data. In other words, in order to get acceptable results, they have to be configured for each new case in a suitable way.

Since these parameters are usually unknown, they have to be found by the user e.g. by trial and error. However this is not possible due to the above-identified constraint R2. Therefore, this optimization has to be done numerically.

To this end, some numerical methods for the optimal configuration of the number of topics (K) have been suggested. Especially the method of minimizing the perplexity of held out documents which allows for an almost automatic determination of an optimal K is well-known. However, this method requires suitable values for the hyperparameters $\alpha$ and $\delta$ as input.

Some proposals for the configuration of the hyperparameters are known.

M. Steyvers and T. Griffiths, [3], propose to set $\alpha = 50/K$ and $\delta = 0.01$. However, for many applications, including many applications in SOM-monitoring, this parametrization results in topic models which are not fine-granular enough.

Wallach [4] proposes several numerical algorithms for the determination of the hyperparameters as parameters of Dirichlet-Multinomial distributions. However, the problem of ensuring fine granular topic models has not been addressed.

The hLDA, hierarchical LDA, model developed by Blei et al. [5] organizes topics in a hierarchical tree, which represents several levels of granularity. The structure of this tree and the topics are learned by using nonparametric Bayes techniques involving a Nested Chinese Restaurant Process. However, this method requires two parameters to be configured by the user and the involved Gibbs sampling process has a computational effort which is often prohibitive.

Titov and McDonald [6] developed the Multi Grain-LDA, MG-LDA, method by extending the generative process of the LDA model. The approach is capable of generating fine granular topic models in terms of global topics (types) and local topics (ratable aspects). However the enhanced generative process leads to two parameters for the number of topics - one for the global topics and another one for the local topics - and five hyperparameters which are configured manually. No solutions are given to determine those parameters automatically.

Similar to [6], Mimno et al. [7] extend the PAM, Pachinko Allocation Model, model in order to generate hierarchical topic models called hPAM, hierarchical Pachinko Allocation Model, as fine granular topic representations. However, also this model requires the configuration of hyperparameters which was done manually and no solutions for their automatic determination are given.

Therefore, there is a need for automatic determination of all needed parameters including the hyperparameters that explicitly take the granularity of the resulting topic model into account.

Another difficulty when using the LDA approach for topic-modeling is due to the fact, that LDA is an unsupervised learning method resulting in a significant number of wrong categorizations of documents in terms of the detected topics.

Moreover, there are often documents which are singular, i.e. which cannot be categorized into topics shared by other documents.

However, since LDA associates to each document at least one topic, inconsistent categorizations most probably occur. This often results in topics which contain many miscategorized documents. E.g. in SOM monitoring, application topics could occur in a topic model which have no real basis. In order to avoid wrong conclusions from a topic model, such suspicious topics should be removed. Moreover, miscategorized documents lead to false document counts per topic. These problems occur especially when fine granular topic models are desired.

Therefore, there is a need for explicit and numerically tractable solutions for detection of inconsistent topics and documents in LDA based topic models.

Summing up, to the author's knowledge there are no methods known which fulfill all constraints R1-R5.

It is an object of the invention to provide a method and a system for generating a topic model for structuring data files. The method according to the present invention is computer-implemented. However, it is understood by the skilled person that there are also other ways of implementing the method according to the present invention.

This object is achieved by a method and a system according to the independent claims. Dependent patent claims refer to preferred embodiments.

The invention relates to a method for generating a topic model for structuring data files. The method comprises the following steps, preferably in the following order: determining from a set of training data files *TrD* an algebraic model for at least two parameters $\alpha$ and $\delta$ as nonlinear functions of a number of topics K, the average number of objects $\bar{L}$ in data files of a data set of data files *FD* or in the training data files *TrD*, a predetermined estimated range $[K_{min}, K_{max}]$ of topics K and a predetermined granularity G of the topic model, optimizing the number of topics K and the at least two parameters $\alpha$ and $\delta$ using the algebraic model and, calculating the topic model on data files of a set of data files *FD* using the optimized number K and the optimized at least two parameters $\alpha$ and $\delta$.

Preferably, the topic model comprises a latent variable model. Preferably the topic model comprises a Latent Dirichlet Allocation. Preferably, the at least two parameters $\alpha$ and $\delta$ are hyperparameters of the Latent Dirichlet Allocation.

Preferably, the parameter of the functions are determined calculating a latent variable model of the data files of the set of training data *TrD*. Preferably, the parameter of the functions are determined calculating a Latent Dirichlet Allocation of the data files of the set of training data *TrD*

Preferably, the algebraic model comprises two equations, each equation comprising two functions.

Preferably, the algebraic model has the following form:

$$\alpha = G * h_\alpha(\bar{L}) * g_\alpha(K)$$

$$\delta = G * h_\delta(\bar{L}) * g_\delta(K),$$

with $h_\alpha(\bar{L})$ and $h_\delta(\bar{L})$ being functions dependent on $\bar{L}$ and $g_\alpha(K)$ and $g_\delta(K)$ being functions dependent on K.

Preferably, the optimization for the parameter K and the at least two parameters $\alpha$ and $\delta$ is a minimization algorithm comprising the following steps:

determining a number of topics K' in the data files of the set of training data *TrD* according to the minimization algorithm;
determining at least two parameters $\alpha'$ and $\delta'$ for the calculated K' using the algebraic model;
determining the perplexity of a set of test data *TeD* by calculating a latent variable model, preferably Latent Dirichlet Allocation, of the data files of the set of training data *TrD* using the at least two parameters $\alpha'$ and $\delta'$ and the calculated K' and calculating the associated perplexity of data files of the set of test data *TeD* using the at least two parameters $\alpha'$ and $\delta'$ for the calculated K';
repeating the previous steps of the minimization algorithm until the optimal parameters $K_{opt}$, $\alpha_{opt}$ and $\delta_{opt}$ are determined for which the perplexity of the data files of a set of test data *TeD* is converged; and setting $K_{opt} = K$, $\alpha_{opt} = \alpha$, and $\delta_{opt} = \delta$.

Preferably, the calculated topic model results in a plurality of topics *n* and wherein the method further comprises the step of estimating the relevance of at least one data file of the set of data files *FD*.

Preferably, the method also comprises a step of estimating the relevance of at least one of the plurality of topics *n*. Preferably, the step of estimating the relevance of each of topics, *n*, comprises the following steps:

- estimating the relevances of all data files of the set of data files *FD*;
- summing up the relevances of the data files of the set of data files *FD*; and
- dividing the summed up relevances of the data files of the set of data files *FD* associated to the topic *n* by the sum of all estimated relevances of all data files of the set of data files *FD*.

Preferably, the relevances of all topics are determined. Preferably, the topics are removed or discarded for which the relevance is below a predetermined threshold.

Preferably, the relevances of all data files of the set of data files *FD* for the plurality of topics *n* are estimated. Preferably, the data files are removed or discarded from the set of data files *FD* for which the relevance is below a predetermined threshold. In other words, the data files are preferably removed having a relevance below a predetermined threshold.

Preferably, the method comprises the following step, preferably before the step of determining an algebraic model for at least two parameters $\alpha$ and $\delta$: generating a set of test data files *TeD* from data files of a set of data files *FD*, each data file comprising a plurality of objects.

Preferably, the method comprises the following step, preferably before the step of determining an algebraic model for at least two parameters $\alpha$ and $\delta$: generating a set of training data files *TrD* from data files of a set of data files *FD*, each data file comprising a plurality of objects.

Preferably, the data files are text documents. Preferably, the data files are pre-processed text documents. Preferably, the set of data is organized in a document-term matrix.

Preferably, the method further comprises the following first step: preprocessing the data files.

The invention also relates to a computer program product comprising one or more computer readable media having computer executable instructions for performing the steps of the above mentioned methods.

The invention also relates to a system for generating a topic model for structuring data files, comprising a first determination unit configured to determine from a set of training data files *TrD* an algebraic model for at least two parameters $\alpha$ and $\delta$ as nonlinear functions of a number of topics K, the average number of objects $\bar{L}$ in data files of a data set of data files *FD* or in the training data files *TrD*, a predetermined estimated range $[K_{min},K_{max}]$ of topics K and a predetermined granularity G of the topic model, an optimization unit configured to determine the optimized values of the number of topics K and the at least two parameters $\alpha$ and $\delta$ using the algebraic model and, a first calculation unit configured to calculate the topic model on data files of a set of data files *FD* using the optimized number K and the optimized at least two parameters $\alpha$ and $\delta$.

It is another object of the present invention to modify/enhance the LDA method in order to arrive at an automatic topic modeling, i.e. fulfilling R2, or at least an almost automatic topic modeling, with configurable granularity including very fine granular versions, see R1, and fulfilling the other constraints R3, R4 and R5.

This is achieved, among others, through the following aspects:

1. Calculation and usage of a model for the hyperparameters which explicitly accounts for the granularity:

This idea is based on the assumption that a collection of documents can be decomposed into many different topic models which differ especially in their granularity. In the case of LDA, the granularity of the resulting topic model depends significantly on the hyperparameters. Therefore, one idea of the present invention is to use a new model for the hyperparameters which - contrary to existing methods-accounts explicitly for the granularity. This hyperparameter model is fitted to the input data, e.g. the document collection and allows for each given K and given granularity to calculate the optimal hyperparameters.

The optimal K and thus also the optimal hyperparameters can then be determined by search over K according to a criterion such as perplexity of held out documents. All these calculations are automatic, i.e. the user needs only to configure a parameter for specifying the degree of granularity and a rough guess for the range of suitable values for K (i.e. $[K_{min}, K_{max}]$). The advantage for the user is that the configuration of these parameters needs only to be done once per application.

The method explicitly addresses the granularity-problem thereby increasing the computational effort only moderately. Typically the proportion for calculation of the hyperparameter model is on the order of 25 % of the overall effort.

2. Calculation and usage of a document relevance estimator:

The parameters of the generated topic model are used in order to calculate a measure for the consistency of each document categorization. Based on this measure, documents having contents which do not comply with the content of their associated topics can be removed from the topic model. Thus, adverse effects due to inconsistent documents can be avoided.

   3. Calculation and usage of a topic relevance estimator:

A measure for the relevance of the detected topics is calculated based on the document relevance estimates. Inconsistent topics which result frequently especially in fine granular cases can be removed using this measure. Moreover, the topics can be sorted according to their relevance which significantly facilitates the evaluation of a topic model.

The method and the system according to the present invention have, among others, the advantageous effect that an almost automatic generation of topic models with configurable granularity including very fine granular resolutions, with only a moderate increase of the computational effort is provided. Thus, the effort for the user is significantly reduced.

The present invention will be explained in more detail in the following with reference to preferred exemplary embodiments and with reference to the attached drawings, in which:

Fig. 1 shows a flowchart of a method according to an embodiment of the present invention; and
Fig. 2 shows a flowchart of a method according to another embodiment of the present invention.

Although the present invention is hereinafter explained for text documents as the data files, it is understood for the skilled person that the present invention is not necessarily tied to data files containing text but also has other various applications to other problems involving collections of data, e.g. data from collaborative filtering, content-based image retrieval and bioinformatics.

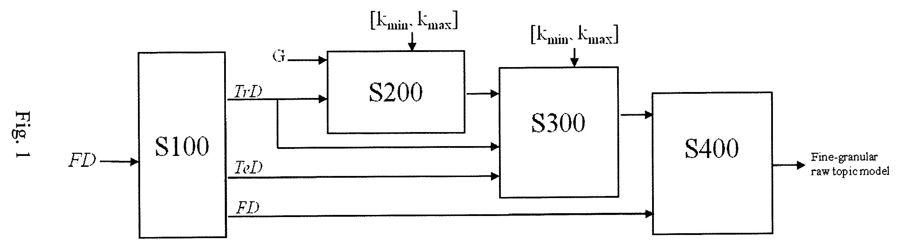

Fig. 1 shows a flowchart of a method according to an embodiment of the present invention.

As a pre-condition, the set of data to be used as the input for the method is a collection of text-documents which has undergone pre-processing steps such as tokenization, removal of punctuation, rare words and stopwords removal and stemming.

The result is organized in a document-term matrix, DTM, with tf-weighting as is usually done when applying an LDA. The DTM is hereinafter referred to as full data DTM, *FD.*

In a first step S100, training data *TrD* and test data *TeD* are generated. According to this embodiment, from the *FD* a certain proportion of the rows, i.e documents, is extracted, e.g. 20 % at random, and a test-DTM is formed. This test-DTM is hereinafter referred to as *TeD.* From the rest of the rows of *FD* a train-DTM, hereinafter referred to as *TrD,* is formed.

In a second step S200, an algebraic hyperparameter-model which is fitted to the input data is generated.

Using this model, suitable values for the hyperparameters $\alpha$, $\delta$ can be calculated for each given number of topics K and given granularity G. According to this embodiment, the model has the form:

$$\alpha = G * h_\alpha(\bar{L}) * g_\alpha(K)$$

$$\delta = G * h_\delta(\bar{L}) * g_\delta(K),$$

where $\bar{L}$ denotes the average document length, i.e. the average number of terms per document after the pre-processing taken from *TrD.* However, it is understood by the skilled person that $\bar{L}$ can alternatively denote the average document length, i.e. the average number of terms per document after the pre-processing taken from *FD.* In other words, $\bar{L}$ can denote the average number of objects in data files of a data set of data files *FD* or $\bar{L}$ can denote the average number of objects in the training data files TrD. In this exemplary embodiment, $\bar{L}$ denote the average number of objects in data files of a data set of data files *TrD.* G is a user defined positive parameter which represents the desired granularity of the topic model; the lower the value of G, the finer the granularity of the topic model.

According to empirical investigations, a range of G = 0.5 ... 5 is suitable for many applications.

According to this embodiment, the functions $h_\alpha(.)$ und $h_\alpha(.)$ have to be monotonically increasing with $\bar{L}$. Empirical investigations in the case of SOM data suggest that polynomials of first order can be used:

$$h_\alpha(\bar{L}) = d_{1\alpha}\bar{L} + d_{0\alpha} \quad d_{1\alpha} > 0$$

$$h_\delta(\bar{L}) = d_{1\delta}\bar{L} + d_{0\delta} \quad d_{1\delta} > 0$$

where the parameters $d_{1\alpha}$, $d_{0\alpha}$, $d_{1\delta}$, $d_{0\delta}$ are constants, i.e. they do not vary across different input data.

According to this embodiment, the functions $g_\alpha(.)$ und $g_\delta(.)$ are nonlinear functions in the number of topics K. They have the following form:

$$g_\alpha(K) = \frac{c_{1\alpha}}{K} + \frac{c_{0\alpha}}{K^2}$$

$$g_\delta(K) = c_{1\delta} + \frac{c_{0\delta}}{K}$$

The coefficients $c_{0\alpha}$, $c_{1\alpha}$ are Least-Squares, LS, estimates according to the following model:

$$y_i K_i^2 = c_{0\alpha} + c_{1\alpha} K_i + \varepsilon_i, \qquad i = 1 \dots M$$

where

- the $(K_i, y_i)$ are grid points over the range of K (i.e. the interval $[K_{min}, K_{max}]$ ), the $y_i$ values being preferably determined using the below-presented algorithm, and
- $\varepsilon_i$ denote the residuals of the LS-fit.

The range $[K_{min}, K_{max}]$ needs to be specified by the user once for the application at hand. Preferably, only rough estimates are needed.

In an analogous way, the coefficients $c_{0\delta}$, $c_{1\delta}$ are determined from a LS-fit where in this case the model is:

$$z_i K_i = c_{0\delta} + c_{1\delta} K_i + \varepsilon_i, i = 1 \dots M$$

The number M of grid-points is the same in both LS-fits and can be set to very low values. According to a preferred embodiment, M=2, such that LS-fitting is not needed.

Preferably, the calculation of the $y_i$ -values and the $z_i$ -values is performed iteratively according to the following steps:

For all i = 1 ... M :

2.A) Initial settings: y(0) = y0, z(0) = z0, e.g. y0 = 0.1, z0 = 0.01, e.g. arbitrary, and k=0, i.e. the iteration step counter

2.B) Calculate an LDA with parameters $\alpha$ = y(k), $\delta$ = z(k), $K_i$

2.C) Extract from the resulting LDA topic model:

- the estimated topic proportions per document: $\theta_{l,n}$ n = 1... $K_i$ , l = 1... $N_D$ where $N_D$ denotes the number of documents in the training collection *TrD;* and
- the estimated term, i.e. word, distributions per topic: $\beta_{j,n}$ n = 1... $K_i$ , j = 1... V where V denotes the number of terms in the vocabulary of the training collection *TrD.*

2.D) Fitting the concentration parameter $\gamma_\theta$ of a

symmetric Dirichlet distribution to the $\theta_{l,n}$ and setting y(k+1) = $\gamma_\theta$

2.E) Fitting the concentration parameter $\gamma_\beta$ of a symmetric Dirichlet distribution to the $\beta_{j,n}$ and setting z(k+1) = $\gamma_\beta$

For the estimation of the parameters $\gamma_\theta$, $\gamma_\beta$, the method according to [8] can be used.

2.F) When the parameters y, z have converged, i.e. when

$$|y(k{+}1) - y(k)| / y(k) < \varepsilon_y$$

and

$$|z(k{+}1) - z(k)| / z(k) < \varepsilon_z ,$$

where e.g. $\varepsilon_y$= $\varepsilon_z$ = 0.05,
then set $y_i$ = y(k+1), $z_i$ = z(k+1) and start again with step 2.A for the next i , else set k:= k+1 and go to step 2.B.

According to an embodiment of the invention, the coefficients $c_{0\alpha}$, $c_{1\alpha}$ , $c_{0\delta}$ , $c_{1\delta}$ in the functions $g_\alpha(.)$ und $g_\delta(.)$ are dependent on the input data and this fact is accounted for by the data-dependent process as detailed above.

However, in some embodiments, these coefficients can be approximated by suitable constants, i.e. independent of the input data, which can simplify the processing and reduce the computational effort.

In step 300, the parameters $\alpha$, $\delta$, K which are optimal for the given granularity are determined.

According to this embodiment, the number of topics K will be determined by minimization of the perplexity of test data *TeD.* However, also other suitable optimization criteria could be used. In this case, the steps discussed below are to be modified accordingly. For each actual search-point K, the corresponding hyperparameters $\alpha$, $\delta$, are calculated based on the model from step S200.

The steps of the optimization loop in S300 are preferably the following:

3.A) Set: New value for K according to some algorithm for minimization of a real-valued function, e.g. a Golden Section Search.

3.B) Calculation of hyperparameters $\alpha$, $\delta$, for the current K using the hyperparameter model in step S200.

3.C) Estimation of the perplexity of the test data *TeD* resulting from the current parameters $\alpha$, $\delta$, K, i.e.

- Calculation of an LDA with parameters $\alpha$, $\delta$, K using the training data *TrD,*
- Calculation of the associated perplexity using the test data *TeD.*

3.D) When the minimization procedure with respect to K has converged

- set: $K_{opt}$ = K, $\alpha_{opt}$ = $\alpha$, $\delta_{opt}$ = $\delta$ and stop
- else go to step 3.A.

In step S300, the calculation of the optimal parameters for the subsequent LDA in step S400 is performed resulting in the optimal parameters $K_{opt}$, $\alpha_{opt}$, $\delta_{opt}$.

In step S400, the optimal topic model is calculated. An LDA is calculated using the optimal parameters $K_{opt}$, $\alpha_{opt}$, $\delta_{opt}$ from step S300. As input the data from the whole collection *FD* including the training data *TrD* and the test data *TeD* are used.

The result of this method according to this embodiment is a fine-granular raw topic model.

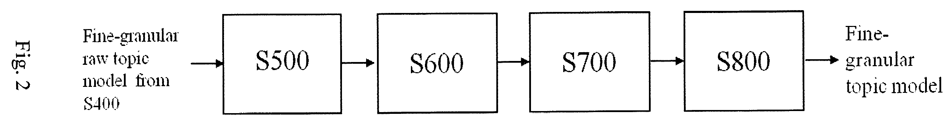

Fig. 2 shows a flowchart of a method according to another embodiment of the present invention.

In step S500, the fine-granular topic model calculated in step S400 is used and the document relevances are estimated.

The LDA as calculated in S400, delivers for each detected topic *n* an estimated term distribution $\beta_{j,n}$ ($j$ = 1... $V$, $n$ = 1 ... $K_{opt}$) as well as estimated topic proportions for each document $\theta_{l,n}$ ($l$ = 1... $N_D$, $n$ = 1... $K_{opt}$) as well as the topic-assignments of the terms of each document.

Using these values, a relevance value R is calculated for each document :

$$R(l) = \theta_{l,n(l)} * \sum_i \beta_{i,n(l)},$$

where $n(l)$ denotes the topic assigned to the *l*-th document and the sum is over all terms i of document *l*, which have been assigned to the topic $n(l)$.

The higher the number of relevant terms in the document, i.e. high frequencies $\beta_{i,n(l)}$, and the higher the proportion of the associated topic $n(l)$, i.e. $\theta_{l,n(l)}$, the higher the calculated relevance value.

The relevance value is thus a measure for the consistency between the respective document *l* and its associated topic $n(l)$.

This relevance measure has been successfully applied in empirical studies.

However, according to some embodiments, a slightly modified variant is preferred:

$$\tilde{R}(l) = R(l)/m_l,$$

where $m_l$ denotes the number of terms in document *l* which have been assigned to the topic $n(l)$. In this case, compared to the first variant, short documents would receive a higher relevance value compared to longer documents.

In step S600, the topic relevances are estimated. For each detected topic, a relevance value is determined. This is done in two steps:

1. Summing up all document relevances according to step 5 of those documents of the full collection *FD* which have been assigned to the respective topic.

2. The result is divided by the sum of all document relevances of the full collection *FD.*

In step S800, inconsistent documents are eliminated. According to step S500, there exists a relevance value for each document.

The set of all relevance values is sorted in decreasing order, resulting in a sorting of documents according to their relevance.

Preferably, the median of all document relevances, i.e. for the whole collection, is used to determine what would be the minimum relevance value for consistent documents. In other words, all documents are left in the topic model according to the present embodiment whose document relevance measure exceeds the median of all document relevances.

While the invention has been illustrated and described in detail in the drawings and foregoing description, such illustration and description are to be considered illustrative or exemplary and non-restrictive; the invention is thus not limited to the disclosed embodiments. Variations to the disclosed embodiments can be understood and effected by those skilled in the art and practicing the claimed invention, from a study of the drawings, the disclosure, and the appended claims. In the claims, the word "comprising" does not exclude other elements or steps, and the indefinite article "a" or "an" does not exclude a plurality and may mean "at least one".

References:

[1] D. M. Blei, A. Y. Ng, and M. I. Jordan. Latent Dirichlet allocation. Journal of Machine Learning Research, 3:993-1022, January 2003.

[2] D. M. Blei, Probabilistic Topic Models. Communications of the ACM, vol. 55 | no. 4, 77-84, April 2012.

[3] M. Steyvers and T. Griffiths. Probabilistic topic models. In T. Landauer, D. McNamara, S. Dennis, and W. Kintsch, editors, Latent Semantic Analysis: A Road to Meaning. Laurence Erlbaum, 2007.

[4] H. M. Wallach. Structured Topic Models for Language. PhD thesis, University of Cambridge, 2008.

[5] D. Blei, T. Griffiths, and M. Jordan, "The nested Chinese restaurant process and Bayesian nonparametric inference of topic hierarchies," Journal of the ACM, vol. 57, no. 2, pp. 7:1-30, 2010.

[6] I. Titov and Ryan McDonald. Modeling online reviews with multi-grain topic models. Proceedings of the 17th international conference on World Wide Web, pages 111-120. ACM, 2008

[7] D. Mimno, W. Li, and A. McCallum. Mixtures of hierarchical topics with Pachinko allocation. In Proc. 24th Int. Conf. on Machine Learning (ICML), 2007.

[8] T. Minka. Estimating a Dirichlet distribution. 2000. URL http://research.microsoft.com/en-us/um/people/minka/papers/dirichlet/minka-dirichlet.pdf.

**Claims**

1. Method for generating a topic model for structuring data files, the method comprising the following steps, preferably in the following order:

   a) determining from a set of training data *TrD* an algebraic model for at least two parameters $\alpha$ and $\delta$ as nonlinear functions of a number of topics K, the average number of objects L in data files of a data set of data files *FD* or in the training data files *TrD,* a predetermined estimated range [$K_{min},K_{max}$] of topics K and a predetermined granularity G of the topic model; and
   b) optimizing the number of topics K and the at least two parameters $\alpha$ and $\delta$ using the algebraic model; and
   c) calculating the topic model on data files of the set of data files *FD* using the optimized number K and the optimized at least two parameters $\alpha$ and $\delta$.

2. Method according to claim 1, wherein the topic model comprises a latent variable model, preferably Latent Dirichlet Allocation and wherein the at least two parameters $\alpha$ and $\beta$ are preferably hyperparameters of the Latent Dirichlet Allocation.

3. Method according to claim 1 or 2, wherein the parameters of the functions are determined calculating a latent variable model, preferably a Latent Dirichlet Allocation of the data files of the set of training data TrD.

4. Method according to any of claims 1 to 3, wherein the algebraic model comprises two equations, each equation comprising two functions..

5. Method according to any of the preceding claims, wherein the algebraic model has the following form:

$$\alpha = G * h_\alpha(\overline{L}) * g_\alpha(K)$$

$$\delta = G * h_\delta(\overline{L}) * g_\delta(K),$$

with $h_\alpha(\overline{L})$ and $h_\delta(\overline{L})$ being functions dependent on $\overline{L}$ and $g_\alpha(K)$ and $g_\delta(K)$ being functions dependent on *K*.

6. Method according to any of claims 1 to 5, wherein the optimization algorithm is a minimization algorithm comprising the following steps:

   i. determining a number of topics K' in the data files of the set of training data *TrD* using a minimization algorithm;
   ii. determining at least two parameters $\alpha$' and $\delta$' for the calculated K' using the algebraic model;
   iii. determining the perplexity of a set of test data *TeD* by calculating a latent variable model, preferably Latent Dirichlet Allocation, of the data files of the set of training data *TrD* using the at least two parameters $\alpha$' and $\delta$' and the calculated K' and calculating the associated perplexity of data files of the set of test data *TeD* using the at least two parameters $\alpha$' and $\delta$' for the calculated K';
   iv. repeating the steps i. to iv. until the optimal parameters K$_{opt}$, $\alpha_{opt}$ and $\delta_{opt}$ are determined for which the perplexity of the data files of a set of test data *TrD* is converged; and
   v. setting K$_{opt}$= K, $\alpha_{opt}$ =$\alpha$, and $\delta_{opt}$ =$\delta$.

7. Method according to any of the preceding claims, wherein the calculated topic model results in a plurality of topics *n* and wherein the method further comprises the step of estimating the relevance of at least one data file of the set of data files *FD.*

8. Method according to claim 7, further comprising the step of estimating the relevance of at least one of the plurality of topics by performing the following steps for each of such topics n:

   - estimating the relevances of all data files of the set of data files *FD;*
   - summing up the relevances of the data files of the set of data files *FD;* and
   - dividing the summed up relevances of the data files of the set of data files *FD* associated to the topic *n* by the sum of all estimated relevances of all data files of the set of data files *FD.*

9. Method according to claim 8, wherein the relevances of all topics are determined and wherein the topics are removed or discarded for which the relevance is below a predetermined threshold.

10. Method according to any of claims 7 to 9, wherein the relevances of all data files of the set of data files *FD* for the plurality of topics *n* are estimated and wherein the data files are removed or discarded from the set of data files *FD* for which the relevance is below a predetermined threshold.

11. Method according to any of the preceding claims further comprising the following step before step a):

   generating a set of test data files *TeD* from data files of a set of data files *FD,* each data file comprising a plurality of objects and/or
   generating a set of training data files *TrD* from data files of a set of data files *FD,* each data file comprising a plurality of objects.

12. Method according to any of the preceding claims, wherein the data files are text documents, preferably pre-processed text documents.

13. System for generating a topic model for structuring data files, comprising
   a first determination unit configured to determine from a set of training data files *TrD* an algebraic model for at least two parameters $\alpha$ and $\delta$ as nonlinear functions of a number of topics K, the average number of objects $\bar{L}$ in data files of a data set of data files *FD* or in the training data files *TrD,* a predetermined estimated range $[K_{min}, K_{max}]$ of topics K and a predetermined granularity G of the topic model; and
   an optimization unit configured to determine the optimized values of the number of topics K and the at least two parameters $\alpha$ and $\delta$ using the algebraic model; and
   a first calculation unit configured to calculate the topic model on data files of a set of data files *FD* using the optimized number K and the optimized at least two parameters $\alpha$ and $\delta$.

14. Computer program product comprising one or more computer readable media having computer executable instructions for performing the steps of the method of one of claims 1 to 13.

Fig. 1

FD →

S100

FD · TrD · TrD

G →

S200

[k_min, k_max]

S300

[k_min, k_max]

S400

→ Fine-granular raw topic model

FD

Fine-granular raw topic model from S400 → S500 → S600 → S700 → S800 → Fine-granular topic model

Fig. 2

Europäisches
Patentamt

European
Patent Office

Office européen
des brevets

# EUROPEAN SEARCH REPORT

Application Number

EP 16 17 3130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Hanna M Wallach ET AL: "Rethinking LDA: Why Priors Matter", Selected Works of Hanna M. Wallach, 31 December 2009 (2009-12-31), pages 1-11, XP055364818, Retrieved from the Internet: URL:https://works.bepress.com/hanna_wallach/10/ [retrieved on 2017-04-13] * page 1, last paragraph - page 2, line 3 * * page 2, line 4 - line 8 * * page 3, line 31 - line 32 * * page 7, paragraph second last * * last three lines; page 7 * * table 1 * ----- | 1-14 | INV. G06F17/30 |
| X | Ivan Savov: "Latent Dirichlet Allocation for scientific topic extraction", , 17 December 2009 (2009-12-17), pages 1-10, XP055364519, Retrieved from the Internet: URL:http://www.cnd.mcgill.ca/~ivan/automatic topic extraction of arXiv quant-ph.pdf [retrieved on 2017-04-12] * abstract * * Section 4 * * Section 4.1 * * Section 5 * * Section 5.4 * ----- -/-- | 1-14 | TECHNICAL FIELDS SEARCHED (IPC) G06F |

The present search report has been drawn up for all claims

| Place of search | Date of completion of the search | Examiner |
|---|---|---|
| The Hague | 3 May 2017 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 16 17 3130

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | Quentin Pleplé: "Perplexity To Evaluate Topic Models", , 31 May 2013 (2013-05-31), pages 1-3, XP055364910, Retrieved from the Internet: URL:http://qpleple.com/perplexity-to-evaluate-topic-models/ [retrieved on 2017-04-13] * the whole document * ----- | 1-14 | |
| | | | **TECHNICAL FIELDS SEARCHED (IPC)** |

The present search report has been drawn up for all claims

| Place of search | Date of completion of the search | Examiner |
|---|---|---|
| The Hague | 3 May 2017 | Rameseder, Jonathan |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **D. M. BLEI ; A. Y. NG ; M. I. JORDAN.** Latent Dirichlet allocation. *Journal of Machine Learning Research,* January 2003, vol. 3, 993-1022
- **D. M. BLEI.** Probabilistic Topic Models. *Communications of the ACM,* April 2012, vol. 55 (4), 77-84
- Probabilistic topic models. **M. STEYVERS ; T. GRIFFITHS.** Latent Semantic Analysis: A Road to Meaning. Laurence Erlbaum, 2007
- Structured Topic Models for Language. **H. M. WALLACH.** PhD thesis. University of Cambridge, 2008
- **D. BLEI ; T. GRIFFITHS ; M. JORDAN.** The nested Chinese restaurant process and Bayesian nonparametric inference of topic hierarchies. *Journal of the ACM,* 2010, vol. 57 (2), 7

- Modeling online reviews with multi-grain topic models. **I. TITOV ; RYAN MCDONALD.** Proceedings of the 17th international conference on World Wide Web. ACM, 2008, 111-120
- **D. MIMNO ; W. LI ; A. MCCALLUM.** Mixtures of hierarchical topics with Pachinko allocation. *In Proc. 24th Int. Conf. on Machine Learning (ICML),* 2007
- **T. MINKA.** *Estimating a Dirichlet distribution,* 2000, http://research.microsoft.com/en-us/um/people/minka/papers/dirichlet/minka-dirichlet.pdf